(19) Europäisches Patentamt
European Patent Office
Office européen des brevets

(11) **EP 4 060 295 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **22153126.2**

(22) Anmeldetag: **25.01.2022**

(51) Internationale Patentklassifikation (IPC):
**G01F 1/84** (2006.01)   **G01F 15/02** (2006.01)
**G01F 25/10** (2022.01)

(52) Gemeinsame Patentklassifikation (CPC):
**G01F 1/84; G01F 1/8436; G01F 15/02; G01F 25/10**

(54) **VERFAHREN ZUR KOMPENSATION DES EINFLUSSES DER REYNOLDS-ZAHL AUF DIE MESSUNG EINES CORIOLIS-MASSENDURCHFLUSSMESSGERÄTS UND DERARTIGES GERÄT**

METHOD FOR COMPENSATING FOR THE INFLUENCE OF THE REYNOLDS NUMBER ON THE MEASUREMENT OF A CORIOLIS MASS FLOW METER AND SUCH A DEVICE

PROCÉDÉ DE COMPENSATION DE L'EFFET DU NOMBRE DE REYNOLDS SUR LA MESURE D'UN DÉBITMÈTRE MASSIQUE DE CORIOLIS ET APPAREIL CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2021 DE 102021202464**

(43) Veröffentlichungstag der Anmeldung:
**21.09.2022 Patentblatt 2022/38**

(73) Patentinhaber: **ROTA YOKOGAWA GmbH & Co. KG**
**79664 Wehr (DE)**

(72) Erfinder: **Reinshaus, Peter**
**79664 Wehr (DE)**

(74) Vertreter: **Tomerius, Isabel**
**Lang & Tomerius**
**Patentanwaltspartnerschaft mbB**
**Rosa-Bavarese-Strasse 5**
**80639 München (DE)**

(56) Entgegenhaltungen:
DE-A1- 2 420 896    DE-A1-102019 116 872
US-A1- 2019 003 875    US-A1- 2020 249 062

- **Vivek Kumar ET AL: "Numerical simulations of Coriolis flow meters for low Reynolds number flows", MAPAN, Bd. 26, 225, 1. September 2011 (2011-09-01), Seiten 225-235, XP055676306, India DOI: 10.1007/s12647-011-0021-6 Gefunden im Internet: URL:https://link.springer.com/article/10.1 007/s12647-011-0021-6 [gefunden am 2022-06-16]**
- **Huber Christof ET AL: "EFFECT OF REYNOLDS NUMBER IN CORIOLIS FLOW MEASUREMENT", Endress+Hauser Flowtec AG , 1. Januar 2013 (2013-01-01), Seiten 1-9, XP055932424, Reinach, Switzerland Gefunden im Internet: URL:https://www.vsl.nl/sites/default/files /rtf/Paul_Ceglia_Effects_of_Reynolds_Numbe r_on_Coriolis_Flowmeters_Paper.pdf [gefunden am 2022-06-16]**

EP 4 060 295 B1

**Beschreibung**

Die Erfindung betrifft ein Verfahren zur Kompensation des Einflusses wenigstens eines der Parameter aus der Gruppe, bestehend aus Durchflussrate, Viskosität, Dichte und Reynolds-Zahl eines zu messenden Fluids, auf die gemessene Durchflussrate und/oder gemessene Dichte dieses Fluids in einem Coriolis-Massendurchflussmessgerät. Darüber hinaus betrifft die Erfindung ein Coriolis-Massendurchflussmessgerät mit einer Steuereinrichtung, die zur Durchführung des Verfahrens ausgebildet ist.

Gattungsgemäße Coriolis-Massendurchflussmessgeräte sind beispielsweise aus der EP 2 657 659 A1, der US 2009 0 055 119 A1, der WO 2021 091 551 A1, der US 2020 0 249 062 A1, der DE 24 20 896 A1, der CN 1 11 854 862 A oder der DE 10 2012 016 490 A1 bekannt. Sie werden in unterschiedlichen Industriezweigen eingesetzt, um den Massenstrom beziehungsweise die Durchflussrate und/oder die Dichte eines Fluids zu messen. Bekannte Coriolis-Massendurchflussmessgeräte umfassen ein Gehäuse mit einem Einlass und einem Auslass für einen Messstoff beziehungsweise ein fluides Medium, sprich, das zu messende Fluid. Darüber hinaus umfasst das Coriolis-Massendurchflussmessgerät wenigstens ein Messrohr, das von dem zu messenden Fluid durchströmbar ausgebildet und zwischen dem Einlass und dem Auslass angeordnet ist. Das Messrohr kann den Messstoff über unterschiedliche Wege vom Einlass zum Auslass führen, beispielsweise kann das Messrohr bogenförmig, U-förmig oder auch gerade angeordnet sein. Das Messrohr an sich wird in Abhängigkeit von der jeweiligen Anwendung ausgewählt, beispielsweise mit großem Durchmesser für große Durchflussraten. Auf diese Weise wird das Coriolis-Massendurchflussmessgerät an das zu messende Fluid und die erwarteten Volumenströme angepasst.

Die Messung selbst beruht dann auf dem Coriolis-Prinzip. Dazu umfasst das Coriolis-Massendurchflussmessgerät einen Schwingungserreger, der dazu ausgebildet ist, das Messrohr in Schwingungen, vorzugsweise Resonanzschwingungen, zu versetzen. Der Erreger kann beispielsweise als elektromagnetische Treiberspule und Magnet ausgebildet sein. Darüber hinaus sind zwei Schwingungsaufnehmer zur Detektion der Messrohrbewegungen vorgesehen, die beispielsweise entlang der Strömungsrichtung des Messrohres voneinander beabstandet an diesem angeordnet sind, vorzugsweise auf unterschiedlichen Seiten des Schwingungserregers. Aufgrund der durch den Erreger induzierten Schwingung der Messrohre wirken Corioliskräfte auf das im Messrohr fließende Fluid, die zu einer Phasenverschiebung der von den Schwingungsaufnehmern detektierten Schwingung führen. Aus dieser Phasenverschiebung kann auf den Massenstrom beziehungsweise die Durchflussrate des durch das Messrohr fließenden Fluids geschlossen werden. Aus der Frequenz der Resonanzschwingung des Messrohres kann die Dichte des Messstoffes abgeleitet werden. Coriolis-Massendurchflussmessgeräte zeichnen sich durch hohe Präzision und besonders flexible Einsatzmöglichkeiten aus, weshalb sie weit verbreitet sind und für die Messung verschiedenster Fluide eingesetzt werden.

Coriolis-Massendurchflussmessgeräte nutzen grundsätzlich einen linearen Zusammenhang zwischen der beschriebenen Phasenverschiebung und dem Massenstrom beziehungsweise der Durchflussrate des zu messenden Fluids durch das Gerät. Massenstrom und Durchflussrate sind über die Dichte des Fluids ineinander umrechenbar und werden daher vorliegend als synonym betrachtet. Die Messwerte der Coriolis-Massendurchflussmessgeräte weichen typischerweise nur sehr gering vom jeweiligen wahren Wert ab, beispielsweise um höchstens 0,1 % oder sogar nur höchstens 0,05 %. Um derart exakte Messungen gewährleisten zu können, müssen mögliche Störfaktoren möglichst eliminiert werden. So wurde festgestellt, dass der beschriebene lineare Zusammenhang durch Variationen, insbesondere starke Variationen, der Durchflussgeschwindigkeit und des Strömungszustandes, ausgedrückt durch die Reynolds-Zahl, des zu messenden Fluids im Coriolis-Massendurchflussmessgerät beeinflusst wird. Dies gilt sowohl für Fälle, in denen die Reynolds-Zahl des zu messenden Fluids im Betrieb stark schwankt, als auch für Fälle, bei denen die tatsächlich im Betrieb vorliegende Reynolds-Zahl von derjenigen Reynolds-Zahl oder dem Bereich der Reynolds-Zahlen abweicht, in dem das Coriolis-Massendurchflussmessgerät kalibriert wurde. Hierbei besteht ein Problem darin, dass es in der Praxis schwierig ist, viele verschiedene Größenordnungen der Reynolds-Zahl zur Kalibrierung des Coriolis-Massendurchflussmessgeräts experimentell zu realisieren. Die Kalibrierung erfolgt daher entweder über nur einen Teilbereich der möglichen Reynolds-Zahlen im Betrieb oder erfordert viel Zeit und einen extrem hohen Aufwand auch bezüglich der notwendigen Apparatur, um die entsprechenden Betriebszustände, insbesondere für niedrige Reynolds-Zahlen, zu erstellen. Die durch eine Variation der Reynolds-Zahl ausgelöste Verfälschung der Messergebnisse tritt insbesondere bei großen Coriolis-Massendurchflussmessgeräten und/oder Fluiden mit hoher Viskosität auf. Die Verfälschung hängt stark von der Viskosität, der Dichte und der Durchflussrate des zu messenden Fluids ab, die Parameter der Reynolds-Zahl sind.

In der Praxis wird angestrebt, den Einfluss der Reynolds-Zahl beziehungsweise der die Reynolds-Zahl bestimmenden Größen möglichst zu minimieren. Hierbei müssen typischerweise Reynolds-Zahlen von <1 bis hin zu $10^5$ und noch größeren Werten berücksichtigt werden. Die Messung des Massenstroms beziehungsweise der Durchflussrate wird typischerweise mit Wasser bei hohen Durchflussraten kalibriert. Hierbei liegen daher hohe Reynolds-Zahlen vor, beispielsweise $10^6$ oder mehr. Im Bereich hoher Reynolds-Zahlen sind die Messwerte des Coriolis-Massendurchflussmessgerätes daher typischerweise korrekt und müssen nicht korrigiert werden. Im Bereich von Reynolds-Zahlen, die kleiner als $10^6$ sind, müssen allerdings Korrekturen des Messwertes vorgenommen werden. Da in diesem Bereich typischerweise die Messwerte des Coriolis-Massendurchflussmessgeräts niedriger liegen als der wahre Wert, wird dem aus dem linearen Zusammenhang mit der Phasenverschiebung berechneten Messwert ein Korrekturwert aufgeschlagen. Um einen möglichst passenden Korrekturwert zu bestimmen, werden Tests an den Coriolis-Massendurchflussmessgeräten durchgeführt, beispielsweise bei unterschiedlichen Durchflussraten sowie mit Fluiden unterschiedlicher Viskosität, insbesondere deutlich höherer Viskosität als Wasser. Auf Grundlage dieser Tests werden dann beispielsweise Wertetabellen erstellt oder Funktionen vorgeschlagen, die jeweils nur über einen kleinen Teilbereich möglicher Reynolds-Zahlen korrekt sind und daher auch nur in diesen Bereichen zum Einsatz kommen. Im Betrieb werden dann eine Vielzahl von verschiedenen Faktoren herangezogen, beispielsweise die Antriebsleistung des Coriolis-Massendurchflussmessgerätes, die Viskosität des zu messenden Fluids oder der Druckabfall am Coriolis-Massendurchflussmessgerät, um nur einige zu nennen, um den tatsächlich für den aktuellen Fall notwendigen Korrekturwert aus den Tabellen oder den bereichsweise definierten Funktionen zu erhalten. Sowohl die Tabellen als auch die bereichsweise definierten Funktionen gelten allerdings immer nur für diejenigen Bereiche von Reynolds-Zahlen, in denen sie auch tatsächlich getestet wurden. Dies bedeutet, dass ein erheblicher Aufwand damit verbunden ist, die Tabellen und Funktionen zu erstellen, insbesondere über den gesamten interessanten Bereich hinweg. Insbesondere im Bereich niedriger Reynolds-Zahlen (beispielsweise <10) stellt sich dies als extrem aufwendig oder sogar unmöglich dar. Die Veröffentlichung von Vivek Kumar et al., "Numerical simulations of Coriolis flow meters for low Reynolds number flows", MAPAN - Journal of Metrology Society of India, Vol. 26, No. 3, 2011, pp. 225-235, doi:10.1007/s12647-011-0021-6, offenbart, wie für niedrige Reynoldszahlen von 800 bis 10000 ein Coriolis-Durchflussmesser Messungen liefern kann, die aufgrund von fluiddynamischen Kräften von der tatsächlichen Durchflussrate abweichen. Numerische Simulationen der Strömung werden mit experimentellen Ergebnissen verglichen, um die für die Abweichung verantwortlichen Effekte zu bestimmen.

Vor diesem Hintergrund ist es die Aufgabe der vorliegenden Erfindung, eine Möglichkeit anzugeben, wie der Einfluss der Reynolds-Zahl beziehungsweise der die Reynolds-Zahl bestimmenden Parameter auf das Messergebnis eines Coriolis-Massendurchflussmessgerätes verlässlich verringert werden kann, ohne dabei zu einem übermäßigen Aufwand für die Kalibrierung zu führen. Insbesondere sollen die Genauigkeit der Messung verbessert und die damit verbundenen Kosten gesenkt werden.

Die Lösung gelingt mit einem Verfahren und einem Coriolis-Massendurchflussmessgerät gemäß den unabhängigen Ansprüchen. Bevorzugte Weiterbildungen sind in den abhängigen Ansprüchen angegeben.

Konkret gelingt die Lösung bei einem eingangs genannten Verfahren durch das Bestimmen eines Kompensationswertes $M_f(Re)$ für die Durchflussrate beziehungsweise den Massenstrom und/oder die Dichte des zu messenden Fluids mithilfe der Gleichung:

$$M_f(Re) = \frac{f_{max}}{2} \cdot \left\{ 1 - \tanh\left( -\frac{2}{f_{max}} \cdot \left. \frac{dM_f}{d(\log_{10} Re)} \right|_{Re=Re_c} \cdot \left[ \log_{10}(Re) - \log_{10}(Re_c) \right] \right) \right\} \tag{1}$$

Hierbei ist $f_{max}$ der maximale Kompensationswert für gegen Null gehende Reynolds-Zahlen $Re$, $Re_c$ diejenige Reynolds-Zahl, bei der die Kurve des Kompensationswerts die größte Steigung aufweist, und $\left. \frac{dM_f}{d(\log_{10} Re)} \right|_{Re=Re_c}$ die Steigung der Kurve des Kompensationswerts an der Stelle $Re_c$. Es gilt daher insbesondere ebenfalls:

$$f_{max} = \lim_{Re \to 0} \left( M_f(Re) \right) \text{ beziehungsweise } \frac{f_{max}}{2} = M_f(Re) \big|_{Re=Re_c} \tag{2}$$

und

$$Re_c = \max_{Re \to Re_c} \left( \left. \frac{dM_f}{d(\log_{10} Re)} \right|_{Re=Re_c} \right) \tag{3}$$

Die Gleichungen (2) und (3) erläutern dabei lediglich die Definition der in Gleichung (1) genutzten Parameter $f_{max}$ und $Re_c$ näher.

Darüber hinaus erfolgt im erfindungsgemäßen Verfahren ein Korrigieren des Messwertes des Coriolis-Massendurchflussmessgeräts für die Durchflussrate beziehungsweise den Massenstrom und/oder die Dichte des zu messenden Fluids durch den mit Gleichung (1) berechneten Kompensationswert $M_f(Re)$.

Die Erfindung beruht auf der Erkenntnis, dass Gleichung (1) zuverlässige Werte für die Abweichung des Messwertes des Coriolis-Massendurchflussmessgerätes vom wahren Wert liefert, und dies über sämtliche möglichen Reynolds-Zahlen hinweg, also beispielsweise von einer Reynolds-Zahl von nahe null bis zu einer Reynolds-Zahl von $10^7$ oder weit darüber hinaus, im Grunde genommen bis unendlich. Dies bedeutet, dass für jede Reynolds-Zahl des durch das Coriolis-Massendurchflussmessgerät fließenden zu messenden Fluids aus Gleichung (1) ein Kompensationswert Mf(Re) berechnetwerden kann, über den der Einfluss der Reynolds-Zahl auf den Messwert ausgleichbar ist. Die durch Gleichung (1) definierte Funktion liefert also über sämtliche in Betracht kommende Reynolds-Zahlen einen Kompensationswert für das Messergebnis. Es istdaher nicht mehr notwendig, bei der Kalibrierung eines Coriolis-Massendurchflussmessgerätes Werte für sämtliche in Betracht kommende Reynolds-Zahlen zu erstellen und diese in Tabellen zu hinterlegen. Auch müssen keine nur für bestimmte Bereiche von Reynolds-Zahlen definierten beziehungsweise gültigen Funktionen mehr herangezogen werden. Mit der Funktion gemäß Gleichung (1) lässt sich der für jede einzelne Reynolds-Zahl passende Kompensationswert aus nur wenigen Parametern berechnen und ein korrigierter Messwert für den aktuell vorliegenden Anwendungsfall einer speziellen Reynolds-Zahl bestimmen. Durch das Bereitstellen eines exakten Kompensationswertes, der auf die aktuelle Reynolds-Zahl passt, wird insgesamt das Messergebnis verbessert und die Genauigkeit erhöht, da keine vorgegebenen Kompensationsstufen mehr vorkommen, die beispielsweise durch den notwendigen Abstand zweier Kompensationswerte einer Tabelle entstehen würden. Mit anderen Worten stellt die Erfindung kontinuierliche Kompensationswerte anstatt der bisher üblichen diskreten Kompensationswerte zur Verfügung, was die Genauigkeit erhöht.

Grundsätzlich ist es möglich, dass das erfindungsgemäße Verfahren außerhalb des Coriolis-Massendurchflussmessgerätes oder auch beispielsweise zeitlich versetzt zu dessen Betrieb durchgeführt wird. Beispielsweise kann die Kompensation des Einflusses des wenigstens einen Parameters der genannten Gruppe im Nachhinein auf gespeicherte, vom Coriolis-Massendurchflussmessgerät gelieferte Rohdaten angewendet werden. Dies kann beispielsweise auf einem Rechner erfolgen, der die Rohdaten vom Coriolis-Massendurchflussmessgerät empfängt, aber außerhalb von diesem angeordnet ist, beispielsweise als zentraler Server. Bevorzugt ist es allerdings vorgesehen, dass das Bestimmen des Kompensationswertes und das Korrigieren des Messwertes während des Betriebs des Coriolis-Massendurchflussmessgerätes durch eine Steuereinrichtung des Coriolis-Massendurchflussmessgerätes erfolgt. Die Steuereinrichtung des Coriolis-Massendurchflussmessgerätes ist dabei ein Bestandteil des Coriolis-Massendurchflussmessgerätes selbst, so dass dieses insgesamt in der Lage ist, bereits erfindungsgemäß korrigierte Messwerte zu liefern. Auf diese Weise ist keine Nachbearbeitung der gelieferten Daten notwendig und ein Bediener bekommt, ohne hierüber weiter nachdenken oder tätig werden zu müssen, gleich die korrekten Werte direkt über die Ausgabe des Coriolis-Massendurchflussmessgerätes.

Grundsätzlich sind verschiedene rechnerische Möglichkeiten denkbar, über die ein Korrigieren des Messwertes über den aus Gleichung (1) bestimmten Kompensationswert erfolgen könnte. Gemäß einer bevorzugten Ausführungsform ist es vorgesehen, dass zum Korrigieren des Messwertes der Kompensationswert als relative Abweichung des Messwertes, beispielsweise in Prozent, insbesondere als negative relative Abweichung, interpretiert wird, und dass die hieraus bestimmte absolute Abweichung auf den Messwert addiert wird. Gleichung (1) liefert also beispielsweise einen negativen Wert, der mit 100 multipliziert einen prozentualen Anteil des Messwertes angibt, um den dieser zu tief liegt. Ein noch nicht bezüglich des Einflusses der Reynolds-Zahl Re korrigierter Messwert $q_m{}^*$ des Coriolis-Massendurchflussmessgerätes könnte also beispielsweise folgendermaßen korrigiert werden:

$$q_m(Re) = q_m{}^* \cdot \left(1 - M_f(Re)\right) \tag{4}$$

Hierbei ist $q_m$(Re) der bezüglich des Einflusses der Reynolds-Zahl Re korrigierte Messwert des Coriolis-Massendurchflussmessgerätes, während $q_m{}^*$ den noch nicht korrigierten Messwert bezeichnet. In Gleichung (4) wird also der aus Gleichung (1) gewonnene Korrekturwert Mf(Re) genutzt, um auf einfache Weise das Korrigieren des Messwerts des Coriolis-Massendurchflussmessgerätes durchzuführen.

Um die Reynolds-Zahl-abhängige Korrektur des Messwertes des Coriolis-Massendurchflussmessgerätes durchzuführen, ist also die Kenntnis der aktuellen Reynolds-Zahl des durch das Gerät strömenden Fluids notwendig. Wie dem Fachmann bekannt, ist die Reynolds-Zahl grundsätzlich abhängig von der Geometrie des Coriolis-Massendurchflussmessgerätes, beispielsweise dem Rohrdurchmesser, sowie der Durchflussgeschwindigkeit, der Viskosität und der Dichte des zu messenden Fluids. Die Reynolds-Zahl kann daher für einen speziellen Anwendungsfall vorgegeben sein. In diesem Fall reicht ein einmaliges Bestimmen des Kompensationswertes über die Gleichung (1) aus, der dann über die Dauer des Betriebes mit dieser Reynolds-Zahl genutzt werden kann. Typischerweise werden Coriolis-Massendurchflussmessgeräte allerdings in Betriebssituationen mit unterschiedlichen Reynolds-Zahlen (insbesondere durch die variierende Durchflussrate bedingt) eingesetzt. Es ist daher bevorzugt vorgesehen, dass ein Erfassen des Wertes einer aktuellen Reynolds-Zahl des zu messenden Fluids im Coriolis-Massendurchflussmessgerät, insbesondere im laufenden Betrieb, erfolgt. Das erfindungsgemäße Erfassen der aktuellen Reynolds-Zahl kann beispielsweise dadurch erfolgen, dass die Reynolds-Zahl des aktuell zu messenden Fluids unter den aktuellen Betriebsbedingungen vorgegeben wird, beispielsweise von einem Bediener oder einer Steuereinrichtung, die beispielsweise die Steuereinrichtung des Coriolis-Massendurchflussmessgerätes oder eine externe Steuereinrichtung, die mit dem Coriolis-Massendurchflussmessgerät in Verbindung steht, sein kann. Alternativ kann das erfindungsgemäße Erfassen der aktuellen Reynolds-Zahl dadurch erfolgen, dass diese berechnet wird, beispielsweise durch die Steuereinrichtung des Coriolis-Massendurchflussmessgerätes. Hierfür werden beispielsweise Parameter herangezogen, die von vornherein bekannt sind, beispielsweise die Geometrie des Coriolis-Massendurchflussmessgerätes. Darüber hinaus kann beispielsweise ebenfalls die Strömungsgeschwindigkeit und/oder die Dichte des zu messenden Fluids, die vom Coriolis-Massendurchflussmessgerät selbst bestimmbar sind, herangezogen werden. Die Viskosität wiederum kann beispielsweise von einem Bediener oder einer externen Steuereinrichtung vorgegeben werden. Zumindest der Einfluss der Strömungsgeschwindigkeit und/oder der Dichte des zu messenden Fluids auf die Reynolds-Zahl kann im Betrieb des Coriolis-Massendurchflussmessgerätes kontinuierlich von der Steuereinrichtung des Geräts selbst überwacht werden. Beispielsweise können die Werte für die Reynolds-Zahl bei festgestellten Abweichungen der Strömungsgeschwindigkeit und/oder der Dichte des zu messenden Fluids automatisch angepasst werden. In diesem Fall erfolgt auch das Erfassen des Wertes der aktuellen Reynolds-Zahl im laufenden Betrieb des Coriolis-Massendurchflussmessgerätes kontinuierlich, um so in Echtzeit für möglichst genaue Korrekturwerte und dadurch Messergebnisse zu sorgen.

Neben dem aktuellen Wert der Reynolds-Zahl Re fließen in Gleichung (1) ebenfalls die weiteren Parameter $f_{max}$, $Re_c$ und $\left.\frac{dM_f}{d(\log_{10} Re)}\right|_{Re=Re_c}$ ein. Diese können beispielsweise empirisch aus grundle-genden Daten des jeweiligen Anwendungsfalles, beispielsweise der Bauweise des Coriolis-Massendurchflussmessgerätes sowie dem zu messenden Fluid, geschätzt werden. Sobald Zahlenwerte für diese drei Parameter festgelegt sind, hängt Gleichung (1) nur noch von der aktuellen Reynolds-Zahl ab und kann erfindungsgemäß eingesetzt werden. Eine bevorzugte Ausführungsform der Erfindung sieht vor, dass vor dem Bestimmen des Kompensationswerts ein experimentelles Ermitteln der Parameter $f_{max}$, $Re_c$ und $\left.\frac{dM_f}{d(\log_{10} Re)}\right|_{Re=Re_c}$ erfolgt. Dies kann beispielsweise im Rahmen einer Kalibrierung des Co-riolis-Massendurchflussmessgerätes erfolgen. Hierfür werden wie üblich Versuche über einen Bereich verschiedener Größenordnungen von Reynolds-Zahlen durchgeführt, beispielsweise unter Verwendung verschiedener Fluide. Es muss dabei nicht dasselbe Fluid benutzt werden, zu dessen Messung das Coriolis-Massendurchflussmessgerät später eingesetzt wird. Durch die experimentelle Ermittlung der zur Nutzung der Gleichung (1) notwendigen Parameter wird die Genauigkeit der erfindungsgemäßen Kompensation erhöht.

Beim experimentellen Ermitteln der zur Nutzung der Gleichung (1) notwendigen Parameter zeigt sich nun ein weiterer Vorteil des erfindungsgemäßen Verfahrens: Während es im Stand der Technik notwendig war, für eine möglichst exakte Kompensation des Einflusses der Reynolds-Zahl auf die Messergebnisse Kalibrierungsversuche über die gesamte Bandbreite von möglichen Reynolds-Zahlen, also im Grunde von nahe null bis zu $10^7$ und darüber hinaus, durchzuführen, so reicht es erfindungsgemäß aus, einen Teilbereich dieser Größenordnungen abzudecken. Dies kommt dadurch zustande, dass die erfindungsgemäße Gleichung (1) über den gesamten Bereich von Reynolds-Zahlen von null bis unendlich einsetzbar ist. Es macht daher keinen Unterschied, in welchem Bereich der Reynolds-Zahl die Parameter $f_{max}$, $Re_c$ und $\left.\frac{dM_f}{d(\log_{10} Re)}\right|_{Re=Re_c}$ bestimmt werden, solange deren Bestimmung genau genug ist. So können die Parameter beispielsweise in einem Bereich der Reynolds-Zahl bestimmt werden, der experimentell einfach zugänglich ist, beispielsweise in einem Bereich mit hohen Reynolds-Zahlen. Besonders aufwendige Versuche mit niedrigen Reynolds-Zahlen sind auf diese Weise nicht mehr notwendig. Es ist daher bevorzugt vorgesehen, dass das experimentelle Ermitteln der Parameter $f_{max}$, $Re_c$ und $\left.\frac{dM_f}{d(\log_{10} Re)}\right|_{Re=Re_c}$ ausschließlich in einem Bereich erfolgt, in dem das zu messende Fluid im Coriolis-Massendurchflussmessgerät eine Reynolds-Zahl von der Größenordnung von $Re_c$ bis zu mindestens $10^5$ aufweist. "In der Größenordnung von $Re_c$" soll vorliegend bedeuten, dass die untere Grenze des genutzten Bereiches beispielsweise $0{,}5 \cdot Re_c$, bevorzugt $0{,}7 \cdot Re_c$ und besonders bevorzugt $0{,}9 \cdot Re_c$ beträgt. Nach oben hin ist der Bereich bevorzugt offen. Es hat sich gezeigt, dass durch Kalibrierungsversuche, bei denen die Reynolds-Zahl im beschriebenen Bereich liegt, die Parameter $f_{max}$, $Re_c$ und $\left.\frac{dM_f}{d(\log_{10} Re)}\right|_{Re=Re_c}$ mit ausreichender Genauigkeit bestimmbar sind, sodass keine weiteren Versuche in anderen Bereichen mehr notwendig sind.

Ergänzend oder alternativ zur experimentellen Bestimmung und/oder Schätzung der Parameter $f_{max}$, $Re_c$ und

$$\left.\frac{dM_f}{d\left(\log_{10} Re\right)}\right|_{Re=Re_c}$$ , können diese auch aus computergestützten Berechnungen und insbesondere Simulationen der tatsächlichen Geometrie und Beschaffenheit des Coriolis-Massendurchflussmessgerätes bestimmt werden. Eine besonders bevorzugte Ausführungsform sieht beispielsweise vor, dass vor dem Bestimmen des Kompensationswerts ein

Ermitteln der Parameter $f_{max}$, $Re_c$ und $\left.\frac{dM_f}{d\left(\log_{10} Re\right)}\right|_{Re=Re_c}$ mittels der Finite-Elemente-Methode (FEM) erfolgt. Mittels der FEM lassen sich die verschiedenen Parameter des konkreten Anwendungsfalles computergestützt numerisch gegeneinander optimieren. Das genaue Verfahren ist dem Fachmann bekannt, so dass hier nicht näher darauf eingegangen wird.

Das erfindungsgemäße Verfahren bringt den weiteren Vorteil mit sich, dass die entsprechende Kompensation nur eine sehr geringe Zahl an Eingangsdaten beziehungsweise Parametern benötigt. So sind im Stand der Technik notwendige Angaben für eine Kompensation des Einflusses der Reynolds-Zahl auf das Messergebnis, wie beispielsweise die Antriebsleistung oder der Druckabfall am Coriolis-Massendurchflussmessgerät, nicht mehr erforderlich. Um das Verfahren möglichst unkompliziert zu halten und es schnell und einfach durchführen zu können, ist es gemäß einer bevorzugten Ausführungsform daher vorgesehen, dass zur Kompensation des Einflusses des wenigstens einen Parameters der Gruppe, bestehend aus Durchflussrate, Viskosität, Dichte und Reynolds-Zahl eines zu messenden Fluids, auf die gemessene Durchflussrate und/oder Dichte dieses Fluids in einem Coriolis-Massendurchflussmessgerät ausschließlich die aktuelle Reynolds-Zahl Re, $f_{max}$, $Re_c$ und $\left.\frac{dM_f}{d\left(\log_{10} Re\right)}\right|_{Re=Re_c}$ als Eingangsparameter genutzt werden. Selbstverständlich wird ebenfalls der nicht korrigierte Messwert des Coriolis-Massendurchflussmessgerätes genutzt. Die erfindungsgemäße Kompensation erfolgt allerdings bevorzugt ausschließlich über die Gleichungen (1) und (4).

Wie vorstehend beschrieben, ist es bevorzugt, dass das Bestimmen des Kompensationswertes während des Betriebes des Coriolis-Massendurchflussmessgerätes erfolgt, beispielsweise durch dessen Steuereinrichtung. Auch wenn das Bestimmen nicht von der Steuereinrichtung des Coriolis-Massendurchflussmessgerätes durchgeführt wird, bietet das erfindungsgemäße Verfahren allerdings Vorteile. So kann es gemäß einer bevorzugten Ausführungsform der Erfindung vorgesehen sein, dass das Bestimmen des Kompensationswerts für eine Vielzahl von Reynolds-Zahlen vor Inbetriebnahme des Coriolis-Massendurchflussmessgerätes erfolgt und die bestimmten Kompensationswerte in einem Speicher aufgezeichnet werden, und dass eine Steuereinrichtung des Coriolis-Massendurchflussmessgerätes die Kompensationswerte im Betrieb des Coriolis-Massendurchflussmessgerätes aus dem Speicher entnimmt und das Korrigieren des Messwertes anhand dieser Kompensationswerte erfolgt. Bei dem Speicher kann es sich beispielsweise um einen elektronischen Speicher der Steuereinrichtung des Coriolis-Massendurchflussmessgerätes handeln. Mit anderen Worten wird vor dem Betrieb des Coriolis-Massendurchflussmessgerätes eine Tabelle mit einer Vielzahl von vorbestimmten Kompensationswerten, die allerdings alle aus der Gleichung (1) gewonnen wurden, angelegt. Auf diese Tabelle wird dann im Betrieb zurückgegriffen, indem die Steuereinrichtung den entsprechend dem aktuellen Wert der Reynolds-Zahl maßgeblichen Kompensationswert aus der Tabelle entnimmt und diesen für das Korrigieren des Messwertes heranzieht. Liegt die aktuelle Reynolds-Zahl zwischen zwei Reynolds-Zahlen, für die in der Tabelle Kompensationswerte hinterlegt sind, so kann rechnerisch ein zwischen diesen Kompensationswerten liegender Kompensationswert bestimmt werden, beispielsweise durch lineare Interpolation. Auch in diesem Fall ist nur ein Bruchteil der Kalibrierungsversuche notwendig. Gleichzeitig kann über Gleichung (1) eine beliebige Vielzahl von beliebig eng aneinander liegenden Kompensationswerten bestimmt werden, sodass die Genauigkeit einer entsprechenden Kompensation aufgrund der Tabellen des Standes der Technik übertroffen wird.

Die Lösung der eingangs genannten Aufgabe gelingt ebenfalls mit einem Coriolis-Massendurchflussmessgerät, umfassend ein Gehäuse mit einem Einlass und mit einem Auslass für ein fluides Medium, wenigstens ein Messrohr, das von dem fluiden Medium durchströmbar ausgebildet und zwischen dem Einlass und dem Auslass angeordnet ist, einen Schwingungserreger, der dazu ausgebildet ist, das wenigstens eine Messrohr in Schwingungen zu versetzen, zwei Schwingungsaufnehmer zur Detektion der Messrohrbewegungen und eine Steuereinrichtung, wobei die Steuereinrichtung zur Durchführung des vorstehend beschriebenen Verfahrens ausgebildet ist. Bei der Steuereinrichtung handelt es sich beispielsweise um die bereits typischerweise in Coriolis-Massendurchflussmessgeräten vorhandene elektronische Steuereinrichtung, die beispielsweise den Schwingungserreger ansteuert, die Messergebnisse der Schwingungsaufnehmer empfängt und daraus den konkreten Messwert, beispielsweise den Massenstrom, die Durchflussrate und/oder die Dichte des zu messenden Fluides, bestimmt.

Sämtliche vorstehend genannten Merkmale, Vorteile und Wirkungen des erfindungsgemäßen Verfahrens gelten ebenso im übertragenen Sinne für das erfindungsgemäße Coriolis-Massendurchflussmessgerät und umgekehrt. Es wird daher lediglich zur Vermeidung von Wiederholungen auf die jeweils anderen Ausführungen Bezug genommen.

Die Erfindung wird nachstehend anhand der in den Figuren gezeigten Ausführungsbeispiele näher erläutert. Es zeigen schematisch:

Figur 1:     eine Seitenansicht eines Coriolis-Massendurchflussmessgerätes;

Figur 2:     das Messrohr innerhalb des Gehäuses des Coriolis-Massendurchflussmessgerätes gemäß Figur 1;

Figur 3:     ein Diagramm mit beispielshaften Messwertabweichungen und dem Graphen der Kompensationsfunktion nach Gleichung (1);

Figur 4:     einen Graphen der Kompensationsfunktion nach Gleichung (1) zur Erläuterung verschiedener Parameter;

Figur 5:     ein Diagramm zur Veranschaulichung des Einflusses von verschiedenen Werten von $Re_c$ auf den Graphen der Kompensationsfunktion nach Gleichung (1);

Figur 6:     ein Diagramm zur Veranschaulichung des Einflusses von verschiedenen Werten der Steigung des Graphen der Kompensationsfunktion nach Gleichung (1) an der Stelle $Re_c$ auf den Graphen;

Figur 7:     ein Diagramm zur Veranschaulichung des Einflusses von verschiedenen Werten von $f_{max}$ auf den Graphen der Kompensationsfunktion nach Gleichung (1);

Figur 8:     ein Diagramm der korrigierten Messwerte des Beispiels gemäß Figur 3 und

Figur 9:     ein Ablaufdiagramm des Verfahrens.

Gleiche beziehungsweise gleich wirkende Bauteile sind mit den gleichen Bezugsziffern bezeichnet. Sich wiederholende Bauteile sind nicht in jeder Figur gesondert bezeichnet.

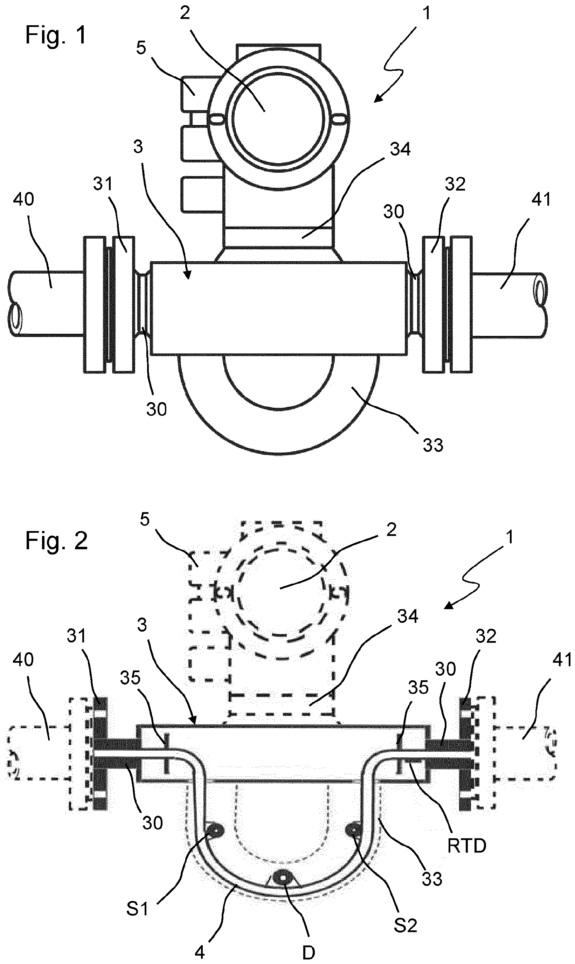

Figur 1 zeigt ein Coriolis-Massendurchflussmessgerät 1 mit einem Transmitter 2 und einem Gehäuse 3. Der Transmitter 2 des Coriolis-Massendurchflussmessgerätes 1 beherbergt die Elektronik unter anderem für den Schwingungserreger und die Schwingungsaufnehmer. Er ist über einen Hals 34 mit dem Gehäuse 3 verbunden. Eine Steuereinrichtung 5 ist vorliegend zur Durchführung des erfindungsgemäßen Verfahrens ausgebildet. Hierfür umfasst sie insbesondere einen Datenspeicher, in dem beispielsweise die Gleichung (1) sowie verschiedene Werte, beispielsweise für die bei der Kalibrierung bestimmten Parameter $f_{max}$, $Re_c$ und $\left.\dfrac{dM_f}{d\left(\log_{10} Re\right)}\right|_{Re=Re_c}$ , hinterlegt sind. Im Betrieb ist das Coriolis-Massendurchflussmessgerät 1 mit seinem Gehäuse 3 in eine Rohrleitung montiert, die das zu messende Fluid transportiert. Insbesondere weist das Coriolis-Massendurchflussmessgerät 1 Anschlussstücke 30 auf, die wiederum einen Einlass 31 zum Anschluss an eine Zuleitung 40 und einen Auslass 32 zum Anschluss an eine Ableitung 41 der Rohrleitung aufweisen.

Darüber hinaus weist das Coriolis-Massendurchflussmessgerät 1, wie in Figur 2 dargestellt, ein Rohrgehäuse 33 auf, in dem zwei Messrohre 4 aufgenommen sind, von denen eines in der Figur nicht sichtbar ist, da es hinter dem anderen liegt und von diesem abgedeckt wird. Figur 2 zeigt ebenfalls den Verlauf der Messrohre 4 durch das Gehäuse 3 vom Einlass 31 über das Rohrgehäuse 33 zum Auslass 32. Der im gezeigten Beispiel U-förmige Verlauf der Messrohre 4 definiert ebenfalls die Strömungsrichtung des Fluids innerhalb des Messrohres 4 und damit innerhalb des Coriolis-Massendurchflussmessgeräts 1. Die Messrohre 4 sind sowohl im Bereich des Einlasses 31 als auch im Bereich des Auslasses 32 mit jeweils einem Fixierungselement 35 fixiert, das im vorliegenden Beispiel als Knotenblech ausgebildet ist. Wie ebenfalls aus Figur 2 hervorgeht, ist am Messrohr 4 ein Schwingungserreger D angeordnet, der im Betrieb des Coriolis-Massendurchflussmessgeräts 1 dazu eingesetzt wird, die Messrohre 4 in Schwingungen, insbesondere Resonanzschwingungen, zu versetzen. Die vom Schwingungserreger D erregten Schwingungen sind in Figur 2 in die Papierebene hinein beziehungsweise aus dieser heraus gerichtet. In Strömungsrichtung vor und hinter dem Schwingungserreger D sind ein erster Schwingungsaufnehmer S1 und ein zweiter Schwingungsaufnehmer S2 an den Messrohren 4 angeordnet. Die Schwingungsaufnehmer S1, S2 detektieren die Bewegungen der Messrohre 4 und insbesondere die vom Schwingungserreger D induzierten Schwingungen. Darüber hinaus ist an den Messrohren 4 ein Temperatursensor RTD angeordnet, der beispielsweise als Widerstandsthermometer ausgebildet ist.

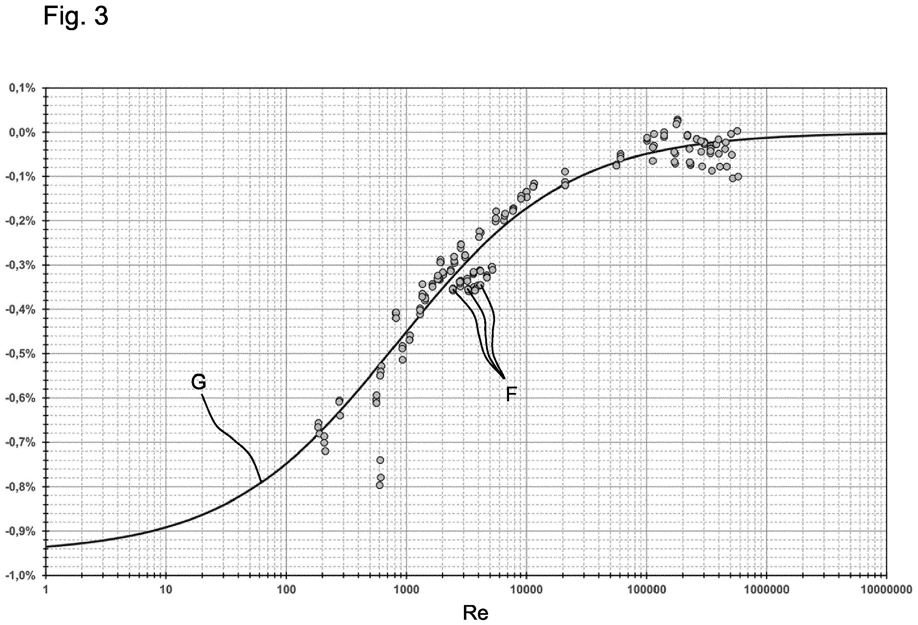

Figur 3 zeigt ein Diagramm zur Veranschaulichung des Zusammenhangs der Messwertabweichung des Coriolis-Massendurchflussmessgerätes 1 und Gleichung (1). Die Abszisse des Diagrammes zeigt die dimensionslose Reynolds-Zahl Re, die Ordinate zeigt die Abweichung eines Messwertes vom wahren Wert in Prozent. Die eingezeichneten Punkte F zeigen die Abweichung von an einem konkreten Beispiel eines Coriolis-Massendurchflussmessgerätes 1 gemessenen Messwerten für die Durchflussrate beziehungsweise den Massenstrom oder die Dichte des zu messenden Fluids vom jeweiligen wahren Wert. Da die Messwerte in einem Kalibrierungs- beziehungsweise Testaufbau gewonnen wurden, sind die wahren Werte bekannt, sodass die Abweichung der einzelnen gemessenen Werte bei der jeweiligen Reynolds-Zahl Re als Punkte F angegeben werden kann. Im konkreten Versuch lagen die Reynolds-Zahlen Re, für die Messwerte gewonnen wurden, in etwa zwischen $10^2$ und $10^6$. Wären die vom Coriolis-Massendurchflussmessgerät 1 gemessenen Werte unabhängig von der Reynolds-Zahl Re, so müssten die Punkte F allesamt auf der horizontalen Linie bei 0,0 % Abweichung liegen beziehungsweise aufgrund anderer Einflussfaktoren symmetrisch um diese Linie streuen. Wie aus der Verteilung der Punkte F der jeweiligen Messwertabweichungen hervorgeht, ist dies allerdings nicht der Fall. Konkret weichen die Messwerte für kleiner werdende Reynolds-Zahlen Re immer stärker vom wahren Wert ab. Wie sich ebenfalls aus Figur 3 ergibt, werden die wahren Werte vom Coriolis-Massendurchflussmessgerät 1 für kleine Reynolds-Zahlen Re immer stärker unterschätzt, sprich, die relative Messwertabweichung in Prozent nimmt immer negativere Werte an, je näher die Reynolds-Zahl Re an null heranrückt. Ebenfalls ist ersichtlich, dass die Messwertabweichungen für große Reynolds-Zahlen Re immer kleiner werden, sprich, die Messwerte immer näher an den wahren Wert heranrücken und daher erwartungsgemäß um die Nulllinie streuen. Wie bereits erwähnt, hängt dies damit zusammen, dass das Coriolis-Massendurchflussmessgerät 1 typischerweise im Betrieb mit hohen Reynolds-Zahlen Re kalibriert wird, da diese experimentell einfacher zu realisieren sind.

An die Verteilung der Punkte F der Messwertabweichungen kann nun die Funktion gemäß Gleichung (1) gefittet werden. Wie ein derartiger Fit durchgeführt werden muss, ist dem Fachmann bekannt und muss daher an dieser Stelle nicht näher erläutert werden. Aus dem Fit lassen sich konkrete Zahlenwerte für die in Gleichung (1) genutzten Parameter gewinnen. Im konkreten in Figur 3 gezeigten Beispiel ergeben sich durch den Fit beispielsweise die Werte $f_{max}$ = -0,00951,

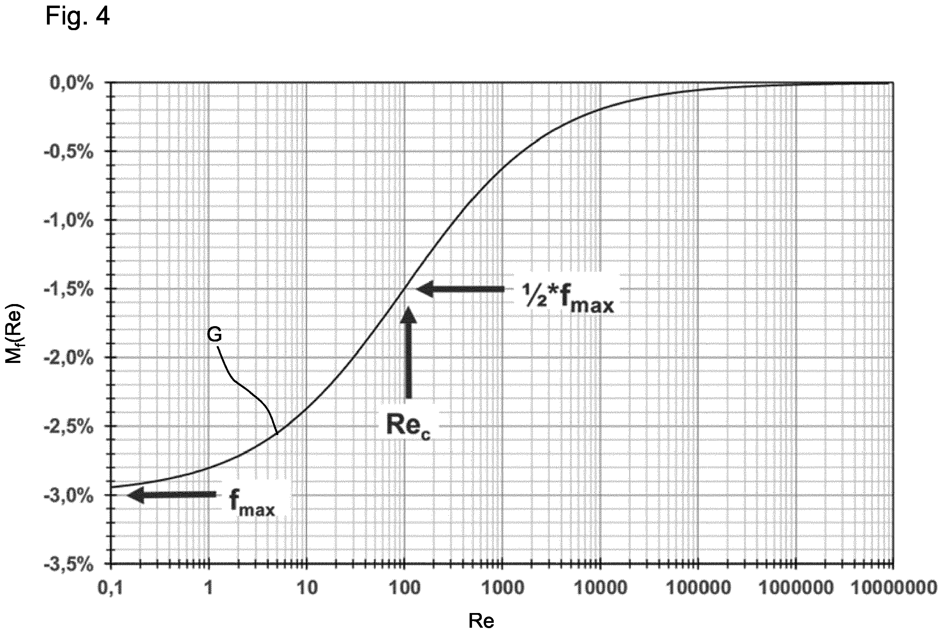

$Re_c$ = 842, und $\left.\dfrac{dM_f}{d(\log_{10} Re)}\right|_{Re=Re_c}$ = 0,00334. Der Graph G, der sich mit diesen Werten aus Gleichung (1) ergibt, ist in Figur 3 ebenfalls gezeigt. Der Graph G folgt dem Verteilungsmuster der Punkte F der Messwertabweichungen und erfüllt die Forderungen, die sich aus experimentellen Beobachtungen ergeben: Für eine gegen null gehende Reynolds-Zahl Re geht der Graph G gegen eine maximale (negative) Messwertabweichung $f_{max}$ (siehe auch Figur 4). Für sehr hohe Reynolds-Zahlen Re geht der Graph G dagegen gegen null. Mit Gleichung (1) ist es daher gelungen, eine Funktion zu finden, die die Messwertabweichungen über die gesamte Spanne von Reynolds-Zahlen Re von null bis unendlich abdeckt. Es ist daher unerheblich, in welchem Bereich von Reynolds-Zahlen Re die Parameter der Funktion bestimmt werden. Solange die entsprechende Bestimmung ausreichend genau ist, kann über Gleichung (1) ebenfalls die Messwertabweichung des Coriolis-Massendurchflussmessgerätes 1 in anderen Bereichen von Reynolds-Zahlen Re treffsicher bestimmt werden. Hierzu ist es nicht notwendig, auch in den Bereichen von Reynolds-Zahlen Re, die experimentell schwer zu realisieren sind, Versuche durchzuführen. Dies führt zu einer erheblichen Beschränkung des Aufwandes bei der Kalibrierung.

In Figur 4 sind verschiedene Parameter der Gleichung (1) graphisch veranschaulicht. Auf der Abszisse ist die Reynolds-Zahl Re aufgetragen, auf der Ordinate die aus Gleichung (1) berechneten Kompensationswerte Mf(Re). Wie aus dem gezeigten Graphen G der Funktion gemäß Gleichung (1) hervorgeht, bezeichnet $f_{max}$ die maximale Messwertabweichung und damit den maximalen Kompensationswert Mf(Re) für gegen null gehende Reynolds-Zahlen Re. Diejenige Reynolds-Zahl Re, bei der der Kompensationswert Mf(Re) die Hälfte seines maximalen negativen Wertes $f_{max}$ annimmt, wird als $Re_c$ bezeichnet. An der Stelle $Re_c$ weist der Graph G der Funktion gemäß Gleichung (1) seine höchste Steigung auf. Mit anderen Worten erreicht $\dfrac{dM_f}{d(\log_{10} Re)}$ für Re = $Re_c$ sein Maximum.

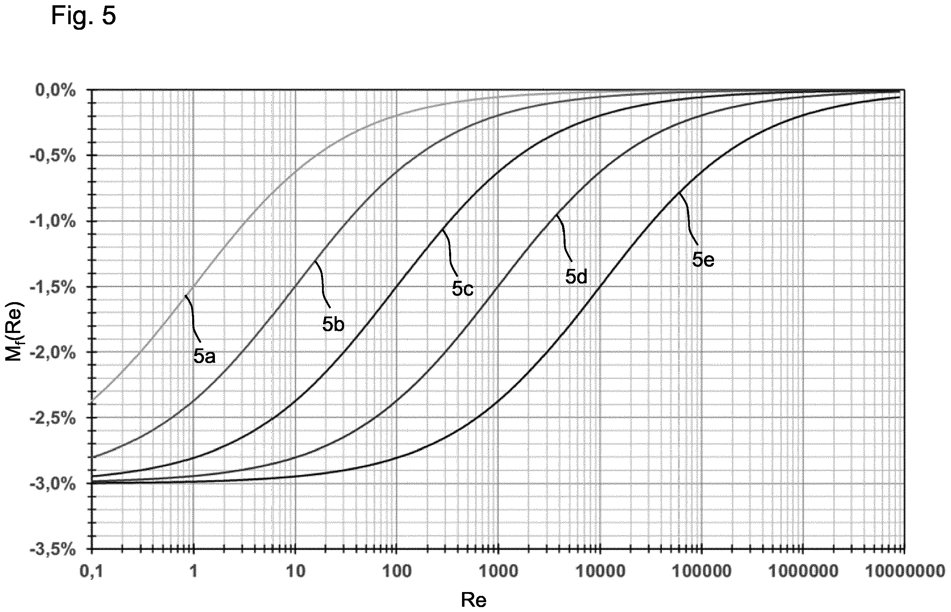

Zum besseren Verständnis der Gleichung (1) wird in den Figuren 5, 6 und 7 der Einfluss der Parameter $f_{max}$,

$Re_c$ und $\left.\dfrac{dM_f}{d(\log_{10} Re)}\right|_{Re=Re_c}$ auf den Graphen der Funktion diskutiert. Figur 5 beispielsweise zeigt den Einfluss von $Re_c$. Die beiden anderen Parameter bleiben dabei konstant, konkret in den gezeigten Graphen 5a bis 5e bei $f_{max}$ = -0,03 und

$\left.\dfrac{dM_f}{d(\log_{10} Re)}\right|_{Re=Re_c} = 0,01$

. Der Wert von $Re_c$ wurde dagegen für die Graphen 5a bis 5e in Zehnerpotenzen erhöht. Konkret hat $Re_c$ beim Graphen gemäß 5a den Wert 1, bei 5b den Wert 10, bei 5c den Wert $10^2$, bei 5d den Wert $10^3$ und bei 5e den Wert $10^4$. Mit der daraus resultierenden Verschiebung der Graphen nach rechts auf der Abszisse verschieben sich entsprechend die Bereiche des stärksten Anstiegs, während die Grenzwerte $f_{max}$ für gegen null gehende Reynolds-Zahlen Re und null für gegen unendlich gehende Reynolds-Zahlen Re gleich bleiben. Auch der Wert des maximalen Anstiegs bleibt gleich.

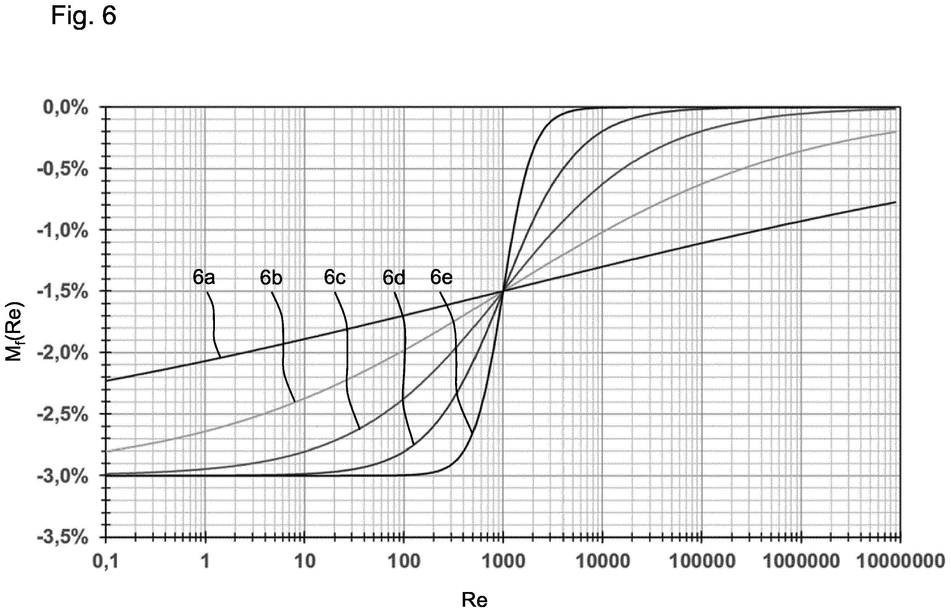

Figur 6 zeigt den Einfluss von unterschiedlichen Werten für $\left.\frac{dM_f}{d(\log_{10} Re)}\right|_{Re=Re_c}$ , also die Steigung des Graphen bei $Re_c$. Die beiden anderen Parameter sind dagegen konstant bei $f_{max}$ = -0,03 und $Re_c$ = $10^3$. Der Parameter $\left.\frac{dM_f}{d(\log_{10} Re)}\right|_{Re=Re_c}$ hat dagegen beim Graphen gemäß 6a konkret den Wert 0,002, bei 6b den Wert 0,005, bei 6c den Wert 0,01, bei 6d den Wert 0,02 und bei 6e den Wert 0,05. Mit höheren Steigungen bei $Re_c$ ergibt sich eine schnellere Annäherung der Kompensationswerte Mf(Re) an die jeweiligen Grenzwerte $f_{max}$ für gegen null gehende Reynolds-Zahlen Re und null für hohe beziehungsweise gegen unendlich gehende Reynolds-Zahlen Re.

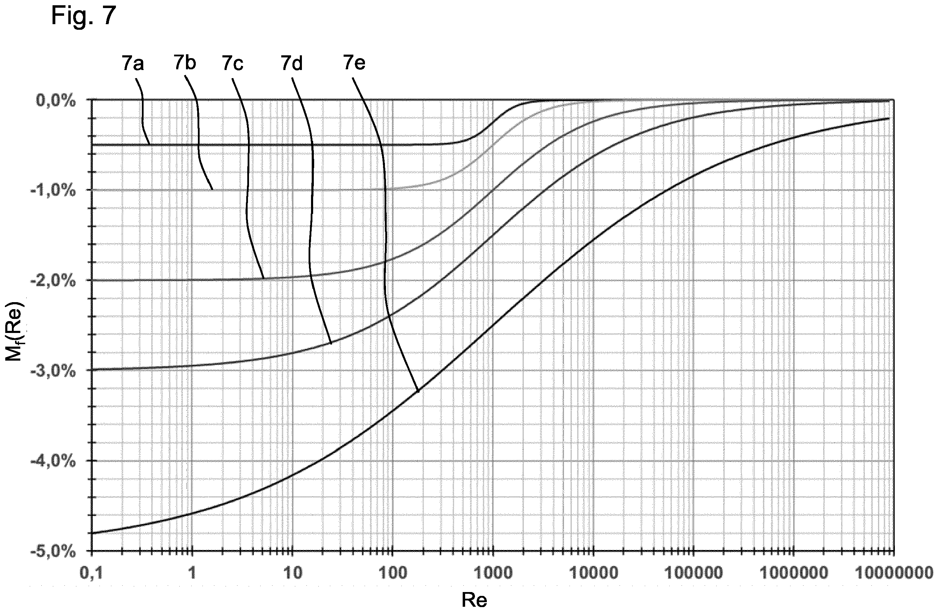

In Figur 7 wiederum wird der Einfluss von unterschiedlichen Werten für $f_{max}$, also den maximalen Kompensationswert Mf(Re), der in diesem Fall maximal negativ ist, gezeigt. Auch hier sind die beiden anderen Parameter wieder konstant gehalten, konkret bei $Re_c$ = $10^3$ und $\left.\frac{dM_f}{d(\log_{10} Re)}\right|_{Re=Re_c} = 0,01$ . Der in Figur 7 betrachtete Parameter $f_{max}$ hat dagegen beim Graphen gemäß 7a den Wert -0,005, bei 7b den Wert -0,01, bei 7c den Wert -0,02, bei 7d den Wert -0,03 und bei 7e den Wert -0,05. Auch hier ergibt sich für näher an null liegende Maximalwerte der Messwertabweichung beziehungsweise der Kompensationswerte $M_f$(Re) neben der vertikalen Stauchung der Graphen eine entsprechend steilere Annäherung an die Grenzwerte $f_{max}$ für gegen null gehende Reynolds-Zahlen Re und null für hohe beziehungsweise gegen unendlich gehende Reynolds-Zahlen Re.

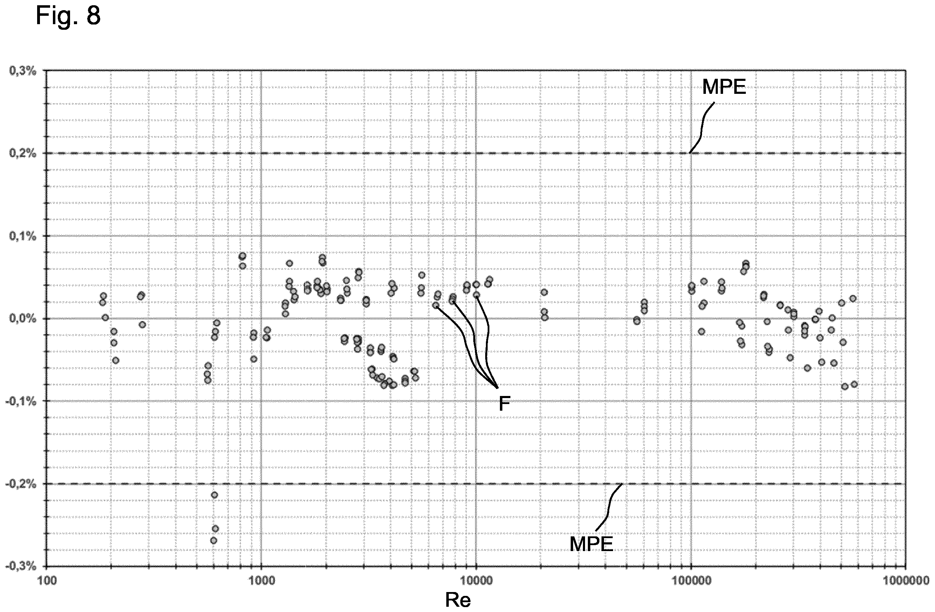

In Figur 8 ist die Kompensationswirkung der Funktion gemäß Gleichung (1) am konkret gemessenen Beispiel aus Figur 3 veranschaulicht. Insbesondere wurden die gemessenen Werte des Coriolis-Massendurchflussmessgeräts 1 wie vorstehend beschrieben durch die aus Gleichung (1) gewonnenen Kompensationswerte Mf(Re) korrigiert. Bildlich kann man sich vorstellen, dass der Graph G aus Figur 3 als neue Nulllinie für die Punkte F genutzt wird und dies in einem neuen Diagramm aufgetragen wurde. Auch das Diagramm gemäß Figur 8 zeigt in der Abszisse die Reynolds-Zahl Re. Auf der Ordinate ist wiederum die Abweichung der gemessenen Werte vom wahren Wert aufgetragen. Wie aus der Darstellung hervorgeht, streuen die gemessenen Punkte F der Messwertabweichung nun, nach dem Korrigieren der Messwerte nach Gleichung (1), allesamt um die Nulllinie herum. Eine Abhängigkeit der Messwertabweichung von der Reynolds-Zahl Re kann nicht mehr festgestellt werden und wurde daher kompensiert. Darüber hinaus ist ebenfalls erkennbar, dass sämtliche experimentell festgestellten Messwertabweichungen bis auf drei Ausreißer innerhalb den Grenzen des bei Coriolis-Massendurchflussmessgeräten 1 üblichen maximal zulässigen Fehlers MPE (engl. *maximum permissible error*) von im vorliegenden Fall $\pm 0,2$ % liegen. Tatsächlich liegen sämtliche Messwertabweichungen bis auf die Ausreißer sogar innerhalb einer Grenze von $\pm 0,1$ %. Die erfindungsgemäße Kompensation trägt daher maßgeblich zur Qualität der Messergebnisse bei.

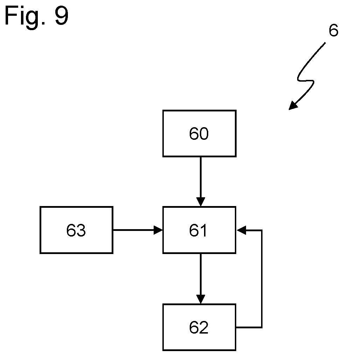

In Figur 9 ist ein Ablaufdiagramm des erfindungsgemäßen Verfahrens 6 dargestellt. Im gezeigten Ausführungsbeispiel beginnt das Verfahren 6 mit einem experimentellen Ermitteln 60 der Parameter $f_{max}$, $Re_c$ und $\left.\frac{dM_f}{d(\log_{10} Re)}\right|_{Re=Re_c}$ . Wie vorstehend erläutert, werden hierfür lediglich Messwerte in einem experimentell leicht zugänglichen Bereich von Reynolds-Zahlen Re benötigt. Die ermittelten Parameter werden beispielsweise in einem Speicher der Steuereinrichtung 5 des Coriolis-Massendurchflussmessgeräts 1 hinterlegt, sodass die Steuereinrichtung 5 hierauf zugreifen kann. Es erfolgt dann, vorzugsweise im Betrieb des Coriolis-Massendurchflussmessgeräts 1, ein Bestimmen 61 eines Kompensationswertes Mf(Re) aus Gleichung (1) über die aktuell für das Fluid im Coriolis-Massendurchflussmessgerät 1 vorliegende Reynolds-Zahl Re. Falls notwendig, erfolgt hierfür ebenfalls ein Erfassen 63 des Wertes dieser aktuellen Reynolds-Zahl Re, beispielsweise durch Empfang von einer zentralen Recheneinheit oder einem Bediener, oder durch ein Berechnen der aktuellen Reynolds-Zahl Re aus dem Coriolis-Massendurchflussmessgerät 1 vorliegenden, diesem zur Verfügung gestellten oder von diesem bestimmten Parametern. Schlussendlich erfolgt ein Korrigieren 62 des Messwertes des Coriolis-Massendurchflussmessgeräts 1 anhand des aus Gleichung (1) bestimmten Kompensationswerts Mf(Re). Das Bestimmen 61 des Kompensationswertes Mf(Re) wird bevorzugt immer dann durchgeführt, wenn sich die Reynolds-Zahl Re im Betrieb des Coriolis-Massendurchflussmessgerätes 1 ändert. Das Korrigieren 62 wiederum wird im Betrieb des Coriolis-Massendurchflussmessgerätes 1 grundsätzlich kontinuierlich betrieben, sodass jeder vom Coriolis-Massendurchflussmessgerät 1 aufgenommene Messwert erfindungsgemäß korrigiert wird. Auf diese Weise wird der Einfluss der Durchflussrate und/oder der Viskosität und/oder der Dichte und/oder der Reynolds-Zahl Re auf die Messwerte des Coriolis-Massendurchflussmessgerätes 1 kompensiert, wodurch die Messgenauigkeit erhöht wird, insbesondere bei im Betrieb schwankenden oder von den Umständen der Kalibrierung abweichenden Reynolds-Zahlen Re. Gleichzeitig reicht es erfindungsgemäß aus, die Kalibrierung nur noch in einem Bereich von Reynolds-Zahlen Re durchzuführen, der experimentell leicht zugänglich ist, wodurch die Kosten der Kalibrierung gesenkt werden.

**Patentansprüche**

1. Verfahren (6) zur Kompensation des Einflusses wenigstens eines der Parameter aus der Gruppe, bestehend aus Durchflussrate, Viskosität, Dichte und Reynolds-Zahl (Re) eines zu messenden Fluids, auf die gemessene Durchflussrate und/oder Dichte dieses Fluids in einem Coriolis-Massendurchflussmessgerät (1),

   **gekennzeichnet durch**
   das Bestimmen (61) eines Kompensationswerts (Mf(Re)) für die Durchflussrate und/oder die Dichte des zu messenden Fluids mithilfe der Gleichung

$$M_f(Re) = \frac{f_{max}}{2} \cdot \left\{ 1 - \tanh\left( -\frac{2}{f_{max}} \cdot \frac{dM_f}{d(\log_{10} Re)}\bigg|_{Re=Re_c} \cdot \left[\log_{10}(Re) - \log_{10}(Re_c)\right]\right)\right\},$$

   wobei $f_{max}$ der maximale Kompensationswert (Mf(Re)) für gegen Null gehende Reynolds-Zahlen (Re) ist, $Re_c$ diejenige Reynolds-Zahl (Re) ist, bei der die Kurve des Kompensationswerts ($M_f$(Re)) die größte Steigung $\frac{dM_f}{d(\log_{10} Re)}\bigg|_{Re=Re_c}$ aufweist, und die Steigung der Kurve des Kompensationswerts (Mf(Re)) an der Stelle $Re_c$ ist, und das Korrigieren (62) des Messwertes des Coriolis-Massendurchflussmessgeräts (1) für die Durchflussrate und/oder die Dichte des zu messenden Fluids durch den Kompensationswert ($M_f$(Re)).

2. Verfahren (6) nach Anspruch 1,
   **dadurch gekennzeichnet,**
   **dass** das Bestimmen (61) des Kompensationswerts (Mf(Re)) und das Korrigieren (62) des Messwertes während des Betriebs des Coriolis-Massendurchflussmessgeräts (1) durch eine Steuereinrichtung (5) des Coriolis-Massendurchflussmessgeräts (1) erfolgt.

3. Verfahren (6) nach einem der vorhergehenden Ansprüche,
   **dadurch gekennzeichnet,**
   **dass** zum Korrigieren (62) des Messwertes der Kompensationswert (Mf(Re)) als relative Abweichung des Messwertes, insbesondere als negative relative Abweichung, interpretiert wird, und dass die hieraus bestimmte absolute Abweichung auf den Messwert addiert wird.

4. Verfahren (6) nach einem der vorhergehenden Ansprüche,
   **dadurch gekennzeichnet,**
   **dass** ein Erfassen (63) des Wertes einer aktuellen Reynolds-Zahl (Re) des zu messenden Fluids im Coriolis-Massendurchflussmessgerät (1), insbesondere im laufenden Betrieb, erfolgt.

5. Verfahren (6) nach einem der vorhergehenden Ansprüche,
   **dadurch gekennzeichnet,**
   **dass** vor dem Bestimmen (61) des Kompensationswerts (Mf(Re)) ein experimentelles Ermitteln (60) der Parameter $f_{max}$, $Re_c$ und $\frac{dM_f}{d(\log_{10} Re)}\bigg|_{Re=Re_c}$ erfolgt.

6. Verfahren (6) nach Anspruch 5,
   **dadurch gekennzeichnet,**
   **dass** das experimentelle Ermitteln (60) ausschließlich in einem Bereich erfolgt, in dem das zu messende Fluid im Coriolis-Massendurchflussmessgerät (1) eine Reynolds-Zahl (Re) von der Größenordnung von $Re_c$ bis zu mindestens $10^5$ aufweist, insbesondere in einem Bereich, dessen untere Grenze für die Reynolds-Zahl (Re) genau $Re_c$ entspricht.

7. Verfahren (6) nach einem der vorhergehenden Ansprüche,
   **dadurch gekennzeichnet,**
   **dass** vor dem Bestimmen (61) des Kompensationswerts (Mf(Re)) ein Ermitteln (60) der Parameter $f_{max}$, $Re_c$ und $\left.\frac{dM_f}{d(\log_{10} Re)}\right|_{Re=Re_c}$ mittels Finite-Elemente-Methode (FEM) erfolgt.

8. Verfahren (6) nach einem der vorhergehenden Ansprüche,
   **dadurch gekennzeichnet,**
   **dass** zur Kompensation des Einflusses des wenigstens einen Parameters der Gruppe ausschließlich die aktuelle Reynolds-Zahl (Re), $f_{max}$, $Re_c$ und $\left.\frac{dM_f}{d(\log_{10} Re)}\right|_{Re=Re_c}$ als Eingangsparameter genutzt werden.

9. Verfahren (6) nach einem der vorhergehenden Ansprüche,
   **dadurch gekennzeichnet,**
   **dass** das Bestimmen (61) des Kompensationswerts (Mf(Re)) für eine Vielzahl von Reynolds-Zahlen (Re) vor Inbetriebnahme des Coriolis-Massendurchflussmessgeräts (1) erfolgt und die bestimmten Kompensationswerte (Mf(Re)) in einem Speicher aufgezeichnet werden, und dass eine Steuereinrichtung (5) des Coriolis-Massendurchflussmessgeräts (1) die Kompensationswerte (Mf(Re)) im Betrieb des Coriolis-Massendurchflussmessgeräts (1) aus dem Speicher entnimmt und das Korrigieren (62) des Messwertes anhand dieser Kompensationswerte (Mf(Re)) erfolgt.

10. Coriolis-Massendurchflussmessgerät (1), umfassend

    - ein Gehäuse (3) mit einem Einlass (31) und mit einem Auslass (32) für ein fluides Medium,
    - wenigstens ein Messrohr (4), das von dem fluiden Medium durchströmbar ausgebildet und zwischen dem Einlass (31) und dem Auslass (32) angeordnet ist,
    - einen Schwingungserreger (D), der dazu ausgebildet ist, das wenigstens eine Messrohr (4) in Schwingungen zu versetzen,
    - zwei Schwingungsaufnehmer (S1, S2) zur Detektion der Messrohrbewegungen und
    - eine Steuereinrichtung (5),

    **dadurch gekennzeichnet,**
    **dass** die Steuereinrichtung (5) zur Durchführung des Verfahrens (6) gemäß einem der vorhergehenden Ansprüche ausgebildet ist.

## Claims

1. A method (6) for compensating the influence of at least one of the parameters from the group consisting of flow rate, viscosity, density and Reynolds number (Re) of a fluid to be measured, on the measured flow rate and/or density of this fluid in a Coriolis mass flow meter (1), **characterized by**
   determining (61) a compensation value (Mf(Re)) for the flow rate and/or density of the fluid to be measured using the following equation

$$M_f(Re) = \frac{f_{max}}{2} \cdot \left\{ 1 - \tanh\left( -\frac{2}{f_{max}} \cdot \left.\frac{dM_f}{d(\log_{10} Re)}\right|_{Re=Re_c} \cdot \left[\log_{10}(Re) - \log_{10}(Re_c)\right] \right) \right\},$$

   where $f_{max}$ is the maximum compensation value (Mf(Re)) for Reynolds numbers (Re) approaching zero, $Re_c$ is the Reynolds number (Re) at which the curve of the compensation value (Mf(Re)) has the largest slope, and $\left.\frac{dM_f}{d(\log_{10} Re)}\right|_{Re=Re_c}$ is the slope of the curve of the compensation value (Mf(Re)) at the point $Re_c$, and correcting (62) the value measured by the Coriolis mass flow meter (1) for the flow rate and/or the density of the fluid to be measured using the compensation value ($M_f$(Re)).

2. The method (6) according to claim 1,
   **characterized in that**
   determining (61) the compensation value (Mf(Re)) and correcting (62) the measured value is performed during operation of the Coriolis mass flow meter (1) by a control device (5) of the Coriolis mass flow meter (1).

3. The method (6) according to any one of the preceding claims,
   **characterized in that**
   for correcting (62) the measured value, the compensation value (Mf(Re)) is interpreted as a relative deviation of the measured value, in particular as a negative relative deviation, and that the absolute deviation determined from it is added to the measured value.

4. The method (6) according to any one of the preceding claims,
   **characterized by**
   acquiring (63) the value of a current Reynolds number (Re) of the fluid to be measured in the Coriolis mass flow meter (1), in particular during operation.

5. The method (6) according to any one of the preceding claims,
   **characterized in that**
   determining (61) the compensation value (Mf(Re)) is preceded by experimentally determining (60) the parameters $f_{max}$, $Re_c$ and $\left.\dfrac{dM_f}{d(\log_{10} Re)}\right|_{Re=Re_c}$ .

6. The method (6) according to claim 5,
   **characterized in that**
   the experimental determining (60) is performed exclusively in a range in which the fluid to be measured in the Coriolis mass flow meter (1) has a Reynolds number (Re) of the order of magnitude of $Re_c$ up to at least $10^5$, in particular in a range in which the lower limit for the Reynolds number (Re) corresponds exactly to $Re_c$.

7. The method (6) according to any one of the preceding claims,
   **characterized in that**
   determining (61) the compensation value (Mf(Re)) is preceded by determining (60) the parameters $f_{max}$, $Re_c$ and $\left.\dfrac{dM_f}{d(\log_{10} Re)}\right|_{Re=Re_c}$ using the finite element method (FEM).

8. The method (6) according to any one of the preceding claims,
   **characterized in that**
   only the current Reynolds number (Re), $f_{max}$, Re, and $\left.\dfrac{dM_f}{d(\log_{10} Re)}\right|_{Re=Re_c}$ are used as input parameters for compensating the influence of the at least one parameter of the group.

9. The method (6) according to any one of the preceding claims,
   **characterized in that**
   the determining (61) of the compensation value (Mf(Re)) is performed for a plurality of Reynolds numbers (Re) before the Coriolis mass flow meter (1) is put into operation and the determined compensation values (Mf(Re)) are recorded in a memory, and that a control device (5) of the Coriolis mass flow meter (1) fetches the compensation values (Mf(Re)) from the memory during operation of the Coriolis mass flow meter (1) and correcting (62) the measured value is performed based on these compensation values ($M_f$(Re)).

10. A Coriolis mass flow meter (1), comprising

    - a housing (3) with an inlet (31) and with an outlet (32) for a fluid medium,
    - at least one measuring tube (4) configured to allow the fluid medium to flow through it and arranged between the inlet (31) and the outlet (32),
    - a vibration exciter (D) configured to set the at least one measuring tube (4) into vibration,
    - two vibration sensors (S1, S2) for detection of the movements of the measuring tubes, and

- a control device (5),

**characterized in that**
the control device (5) is configured for carrying out the method (6) according to any one of the preceding claims.

**Revendications**

1. Procédé (6) de compensation de l'influence d'au moins l'un des paramètres du groupe constitué par le débit, la viscosité, la densité et le nombre de Reynolds (Re) d'un fluide à mesurer, sur le débit mesuré et/ou la densité de ce fluide dans un débitmètre massique à effet Coriolis (1),

   *caractérisé par*
   la détermination (61) d'une valeur de compensation (Mf(Re)) pour le débit et/ou la densité du fluide à mesurer en utilisant l'équation suivante :

   $$M_f(Re) = \frac{f_{max}}{2} \cdot \left\{ 1 - \tanh\left( -\frac{2}{f_{max}} \cdot \left.\frac{dM_f}{d(\log_{10} Re)}\right|_{Re=Re_c} \cdot \left[\log_{10}(Re) - \log_{10}(Re_c)\right] \right) \right\},$$

   où $f_{max}$ est la valeur de compensation maximale (M$_f$(Re)) pour les nombres de Reynolds (Re) tendant vers zéro, $Re_c$ est le nombre de Reynolds (Re) où la courbe de valeur de compensation (Mf(Re)) a la plus grande pente, et $\left.\dfrac{dM_f}{d(\log_{10} Re)}\right|_{Re=Re_c}$ est la pente de la courbe de valeur de compensation (Mf(Re)) au point $Re_c$, et la correction (62) de la valeur mesurée par le débitmètre massique à effet Coriolis (1) pour le débit et/ou la densité du fluide à mesurer en utilisant la valeur de compensation (Mf(Re)).

2. Procédé (6) selon la revendication 1,
   *caractérisé en ce que*
   la détermination (61) de la valeur de compensation (Mf(Re)) et la correction (62) de la valeur mesurée sont réalisées pendant le fonctionnement du débitmètre massique à effet Coriolis (1) avec un dispositif de commande (5) du débitmètre massique à effet Coriolis (1).

3. Procédé (6) selon l'une quelconque des revendications précédentes,
   *caractérisé en ce que,*
   pour la correction (62) de la valeur mesurée, la valeur de compensation (Mf(Re)) est interprétée comme une déviation relative de la valeur mesurée, en particulier comme une déviation négative relative, et *en ce que* la déviation absolue déterminée à partir de celle-ci est ajoutée à la valeur mesurée.

4. Procédé (6) selon l'une quelconque des revendications précédentes,
   *caractérisé par*
   l'acquisition (63) de la valeur d'un nombre de Reynolds courant (Re) du fluide à mesurer dans le débitmètre massique à effet Coriolis (1), en particulier pendant son fonctionnement.

5. Procédé (6) selon l'une quelconque des revendications précédentes,
   *caractérisé en ce que*
   la détermination (61) de la valeur de compensation (Mf(Re)) est précédée par la détermination expérimentale (60) des paramètres $f_{max}$, $Re_c$, et $\left.\dfrac{dM_f}{d(\log_{10} Re)}\right|_{Re=Re_c}$ .

6. Procédé (6) selon la revendication 5,
   *caractérisé en ce que*
   la détermination expérimentale (60) est effectuée exclusivement dans un domaine dans lequel le fluide à mesurer dans le débitmètre massique à effet Coriolis (1) a un nombre de Reynolds (Re) de l'ordre de grandeur allant de $Re_c$ jusqu'à au moins $10^5$, en particulier dans un domaine dans lequel la limite inférieure pour le nombre de Reynolds (Re) correspond exactement à $Re_c$.

7. Procédé (6) selon l'une quelconque des revendications précédentes,
***caractérisé en ce que***
la détermination (61) de la valeur de compensation (Mf(Re)) est précédée par la détermination (60) des paramètres

$f_{max}$, $Re_c$, et $\left.\dfrac{dM_f}{d(\log_{10} Re)}\right|_{Re=Re_c}$ en utilisant la méthode des éléments finis (MEF ou FEM).

8. Procédé (6) selon l'une quelconque des revendications précédentes,
***caractérisé en ce que***

seuls le nombre de Reynolds courant (Re), $f_{max}$, $Re_c$ et $\left.\dfrac{dM_f}{d(\log_{10} Re)}\right|_{Re=Re_c}$ sont utilisés comme paramètres d'entrée pour compenser l'influence dudit au moins un paramètre du groupe.

9. Procédé (6) selon l'une quelconque des revendications précédentes,
***caractérisé en ce que***
la détermination (61) de la valeur de compensation (Mf(Re)) est effectuée pour une pluralité de nombres de Reynolds (Re) avant que le débitmètre massique à effet Coriolis (1) ne soit mis en fonctionnement, et les valeurs de compensation déterminées (Mf(Re)) sont enregistrées dans une mémoire, et ***en ce que*** le dispositif de commande (5) du débitmètre massique à effet Coriolis (1) récupère les valeurs de compensation (Mf(Re)) dans la mémoire pendant le fonctionnement du débitmètre massique à effet Coriolis (1) et la correction (62) de la valeur mesurée est effectuée sur la base de ces valeurs de compensation (Mf(Re)).

10. Débitmètre massique à effet Coriolis (1), comprenant :

- un boîtier (3) avec une entrée (31) et avec une sortie (32) pour un milieu fluide,
- au moins un tube de mesure (4) configuré de manière à permettre au milieu fluide de s'y écouler, et disposé entre l'entrée (31) et la sortie (32),
- un excitateur de vibrations (D) configuré pour mettre ledit au moins un tube de mesure (4) brations,
- deux capteurs de vibrations (S1, S2) pour la détection des mouvements des tubes de mesure, et
- un dispositif de commande (5),

***caractérisé en ce que***
le dispositif de commande (5) est configuré pour mettre en oeuvre le procédé (6) selon l'une quelconque des revendications précédentes.

Fig. 1

Fig. 2

Fig. 3

Fig. 4

$M_f(Re)$

Re

$f_{max}$

$Re_c$

$\frac{1}{2}*f_{max}$

G

0,0%
-0,5%
-1,0%
-1,5%
-2,0%
-2,5%
-3,0%
-3,5%

0,1
1
10
100
1000
10000
100000
1000000
10000000

Fig. 5

Fig. 6

Fig. 7

Fig. 8

EP 4 060 295 B1

Fig. 9

6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2657659 A1
- US 20090055119 A1
- WO 2021091551 A1
- US 20200249062 A1
- DE 2420896 A1
- CN 111854862 A
- DE 102012016490 A1

**In der Beschreibung aufgeführte Nicht-Patentliteratur**

- **VERÖFFENTLICHUNG VON VIVEK KUMAR et al.** Numerical simulations of Coriolis flow meters for low Reynolds number flows. *MAPAN - Journal of Metrology Society of India,* 2011, vol. 26 (3), 225-235